Europäisches Patentamt

European Patent Office

Office européen des brevets

(11) Numéro de publication: **0 425 330 A1**

# DEMANDE DE BREVET EUROPEEN

(21) Numéro de dépôt: 90402731.5

(22) Date de dépôt: 03.10.90

(51) Int. Cl.⁵: **G06F 15/74**

(30) Priorité: 24.10.89 FR 8914097

(43) Date de publication de la demande:
**02.05.91 Bulletin 91/18**

(84) Etats contractants désignés:
**AT BE CH DE DK ES GB GR IT LI LU NL SE**

(71) Demandeur: **PESAGE GESTION
COMMUNICATION S.A.R.L.
Les Champs Blancs, BP 98
F-35512 Cesson-Sévigné(FR)**

(72) Inventeur: **Richer, Louis
La Salmonière
F-35510 Cesson-Sévigné(FR)**

(74) Mandataire: **Le Guen, Louis François
CABINET Louis LE GUEN 38, rue Levavasseur
B.P. 91
F-35802 Dinard Cédex(FR)**

(54) **Système de collecte sur un site central de données d'une pluralité d'installations.**

(57) L'invention concerne un système pour collecter à distance des données, en particulier des données issues d'une pluralité d'installations d'élevage de bétail. Ce système est prévu pour collecter ces données sur un site central relié par le réseau téléphonique commuté à une pluralité d'installations, chacune d'elle comprenant un site local (2) sur lequel est installé un terminal (10) et un micro-ordinateur (9) reliés à un dispositif de réception de données (11) et un site distant (1) sur lequel est installé au moins un dispositif d'émission (15, 17, 19, 21) recevant des signaux de mesure d'un capteur (14, 16, 18, 20) et les fournissant sous forme de données numérisées au dispositif de réception (11) du site local (2), le milieu de transmission entre chaque dispositif d'émission (15, 17, 19, 21) et le dispositif de réception (11) étant le réseau de distribution électrique (3) de l'installation, le dispositif d'e réception (11) transmettant les données qu'il a reçues de chaque dispositif d'émission (15, 17, 19, 21) au micro-ordinateur (9) afin de les traiter informatiquement sur le site local (2) ou au terminal (10) afin de les transmettre au site central, via le réseau téléphonique, où elles seront traitées pour une gestion informatique globale ou particulière des installations.

FIG.1

L'invention concerne un système pour collecter à distance des données, en particulier des données issues d'une pluralité d'installations d'élevage de bétail.

Une installation d'élevage de bétail est approvisionnée en aliments, tels que des farines ou des grains. L'éleveur y surveille la consommation desdits aliments par les animaux pour pouvoir la comparer aux recommandations du fabricant et leurs stocks pour pouvoir passer des commandes au moment voulu. Afin de gérer efficacement une telle installation, il doit posséder une connaissance exacte de ces différents paramètres.

Au niveau du fabricant d'aliments, on gère les commandes d'aliments issues des différentes installations d'élevage. On rend visite aux éleveurs afin de leur présenter de nouveaux aliments. On répond rapidement à leurs questions, on analyse et résoud leurs problèmes, par exemple, d'ordre technique, sanitaire ou économique. Afin d'intervenir efficacement, on doit posséder une connaissance exacte et précise de tous les paramètres et caractéristiques des installations d'élevage des clients.

Le but de l'invention est de donner aux éleveurs et au fabricant la possibilité d'utiliser des outils informatiques pour leur permettre d'effectuer une gestion et un suivi technique, sanitaire et économi que, les uns, de leur installation, l'autre, de l'ensemble des installations d'élevage qui s'approvisionnent chez lui. Pour que cette utilisation soit réellement efficace, il est nécessaire que les données concernant tous les paramètres, les caractéristiques et les éléments variables de chacune des installations d'élevage soient mesurées et stockées in situ. Elles sont ensuite lues et transmises pour être traitées et analysées, soit par des programmes informatiques de gestion d'une installation d'élevage, soit par des programmes pour une gestion globale ou particulière de toutes les installations clientes du fabricant.

Ainsi, le fabricant peut, par exemple, suivre l'évolution de la consommation d'aliments par les animaux de ses clients et déterminer si cette évolution est normale au regard, d'une part, de ses propres recommandations et, d'autre part, de l'évolution du poids que prennent ces animaux. En fonction des paramètres et résultats de mesure obtenus sur une installation, il peut mettre en oeuvre les moyens nécessaires pour répondre à une question donnée de l'éleveur ou effectuer une livraison ou prodiguer les conseils appropriés. L'éleveur, quant à lui, peut suivre localement l'évolution de ses stocks et de la consommation d'aliments par ses animaux.

L'invention concerne un système de collecte, sur un site central, de données d'une pluralité d'installations.

Selon une caractéristique de l'invention, le site central est relié par le réseau téléphonique commuté à chaque installation, celle-ci comprenant un site local sur lequel est installé un terminal et un micro-ordinateur reliés à un dispositif de réception de données et un site distant sur lequel est installé au moins un dispositif d'émission recevant des signaux de mesure d'un capteur les stockant et les fournissant sous forme de données numérisées, après réception d'un code d'identification déterminé issu du dispositif de réception du site local, audit dispositif, le milieu de transmission entre chaque dispositif d'émission et le dispositif de réception étant le réseau de distribution électrique de l'installation, le dispositif de réception, après réception d'un signal de commande issu soit du site local via le terminal soit du micro-ordinateur, transmettant les données qu'il a reçues de chaque dispositif d'émission, soit au terminal afin de les transmettre au site central, via le réseau téléphonique, où elles sont traitées pour une gestion informatique globale ou particulière des installations, soit au micro-ordinateur afin de les traiter informatiquement sur le site local.

Selon une autre caractéristique de l'invention, chaque dispositif d'émission comprend une unité de traitement de données reliée, d'une part, à un convertisseur analogique/numérique recevant des signaux analogiques du capteur associé pour les convertir en signaux numériques et, d'autre part, à un émetteur/récepteur couplé, par l'intermédiaire d'un transformateur d'isolation, au réseau de distribution électrique de l'installation, cette unité de traitement de données effectuant alternativement, d'une part, une lecture des signaux numériques issus du convertisseur, un calcul d'une donnée de mesure à partir de ces signaux et d'une table d'étalonnage mémorisée et une mémorisation de cette donnée de mesure, et, d'autre part, une lecture des signaux reçus de l'émetteur/récepteur, la recherche dans ces signaux de signaux correspondant à un code d'identification, une comparaison de ce code avec celui affecté au dispositif d'émission et, lorsqu'il y a identité, la transmission sur le réseau de distribution électrique de l'installation, par l'intermédiaire de l'émetteur/récepteur, de la donnée de mesure stockée.

Selon une autre caractéristique de l'invention, le dispositif de réception comprend essentiellement une unité de traitement de données qui peut échanger des signaux de données avec le terminal, le micro-ordinateur et un émetteur/récepteur couplé, par l'intermédiaire d'un transformateur d'isolation, au réseau de distribution électrique de l'installation, l'unité de traitement de données effectuant une lecture des signaux de commande émis par le terminal ou le micro-ordinateur et, lorsque ces signaux correspondent à un code d'une demande d'accès à un dispositif d'émission donné, elle transmet sur le réseau de distribution électrique de l'installation, par l'intermédiaire de l'émetteur/récepteur, un signal correspondant au code d'identification de ce dispositif d'émission, puis reçoit, en réponse, une donnée de mesure qu'elle envoie au terminal ou au micro-ordinateur, selon celui qui a effectué la demande d'accès.

Selon une autre caractéristique de l'invention, le dispositif de réception comporte en outre un détecteur de sonnerie qui envoie à l'unité de traitement de données un signal de détection lorsqu'au moins un signal de sonnerie apparaît sur la ligne téléphonique, l'unité de traitement, en réponse à ce signal de détection, envoyant au terminal un signal de prise de ligne afin qu'il établisse sa propre connexion sur la ligne téléphonique, des données pouvant alors être échangées entre la ligne téléphonique et le dispositif de réception par l'intermédiaire du terminal.

Les caractéristiques mentionnées ci-dessus, ainsi que d'autres, apparaîtront plus clairement à la lecture de la description suivante d'un exemple de réalisation, ladite description étant faite en relation avec les dessins joints, parmi lesquels:

la Fig. 1 représente une vue sous forme synoptique d'une installation d'élevage équipée d'un système de collecte de données selon l'invention,

la Fig. 2 est un schéma d'un dispositif d'émission qui équipe un système de collecte de données selon l'invention, et

la Fig. 3 est un schéma d'un dispositif de réception équipant un système selon l'invention.

Un système de collecte de données selon l'invention est prévu pour équiper une pluralité d'installations et un site central qui centralise toutes les données utiles sur chacune de ces installations, le site central et lesdites installations pouvant échanger des données par le réseau téléphonique commuté. La description qui suit considère des installations d'élevage de bétail et un site central où est installé le fabricant d'aliments pour ledit bétail, mais l'invention n'est nullement limitée à une telle application.

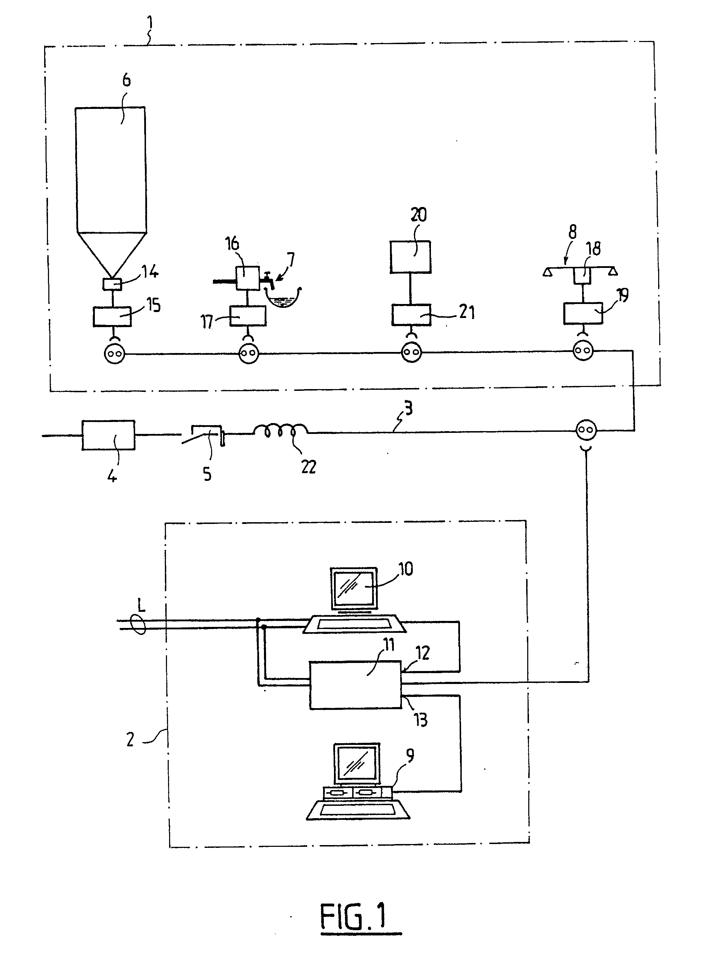

Chaque installation d'élevage, telle que représentée sous forme synoptique à la Fig. 1, comprend un site distant 1 où l'on trouve les installations pour le bétail et un site local 2 où sont rassemblées toutes les données concernant l'installation d'élevage. Le site distant 1 et le site local 2 sont alimentés en énergie électrique par un même réseau local de distribution électrique 3 représenté ici, par souci de simplification, par une seule ligne. Le réseau 3 est relié au réseau public de distribution d'électricité par un compteur d'énergie électrique 4 et un disjoncteur général 5.

Sur le site distant, sont installés au moins un silo de stockage d'aliments solides 6, au moins un distributeur d'aliment liquide 7 et au moins une bascule de pesage 8. Sur le site local 2, sont installés un micro-ordinateur 9 où peuvent être traitées toutes les données concernant l'installation d'élevage, telles que le nombre d'animaux, leur consommation en aliments solide et liquide, leur poids au jour le jour, etc., et un terminal de télécommunications 10 permettant de transmettre des données au fabricant et d'en recevoir par une ligne téléphonique L.

Des dispositifs d'émission sur le site distant 1 transmettent des données, via le réseau de distribution 3, à un dispositif de réception 11, sur le site local 2, dont les sorties 12, 13 sont respectivement reliées au micro-ordinateur 9 et au terminal 10.

Chaque dispositif d'émission est prévu pour recevoir les signaux d'un capteur soit de température, soit de poids, soit d'hygométrie, etc. Ainsi, dans le système représenté à la Fig. 1, un capteur de pression 14 monté sur le silo de stockage 6 délivre, à un premier dispositif d'émission 15, un signal analogique représentatif du poids d'aliment solide présent dans le silo 6. Un capteur de débit 16 monté sur le distributeur d'aliment liquide 7 délivre, à un second dispositif d'émission 17, un signal analogique représentatif de la quantité de liquide fournie, pendant un certain temps, par le distributeur 7. Un capteur de pression 18 monté sur la bascule 8 délivre à un troisième dispositif d'émission 19, un signal analogique représentatif du poids mesuré. Un capteur 20, qui peut, par exemple mesurer la température ambiante ou l'hygrométrie, délivre un signal analogique à un quatrième dispositif d'émission 21. Le nombre de capteurs et de dispositifs d'émission associés, tels que représentés ici, n'est pas limitatif.

On remarque, entre le compteur d'énergie électrique 4 et le réseau de lignes 3, la présence d'un filtre coupe-bande 22 qui évite que les signaux transmis entre les dispositifs d'émission 15, 17, 19, 21, d'une part, et le dispositif de réception 11, d'autre part, soient présents au-delà du compteur 4, côté réseau public de distribution. De plus, dans le cas d'un réseau de lignes triphasé, ce filtre établit un pont électrique pour les signaux transmis entre les trois phases.

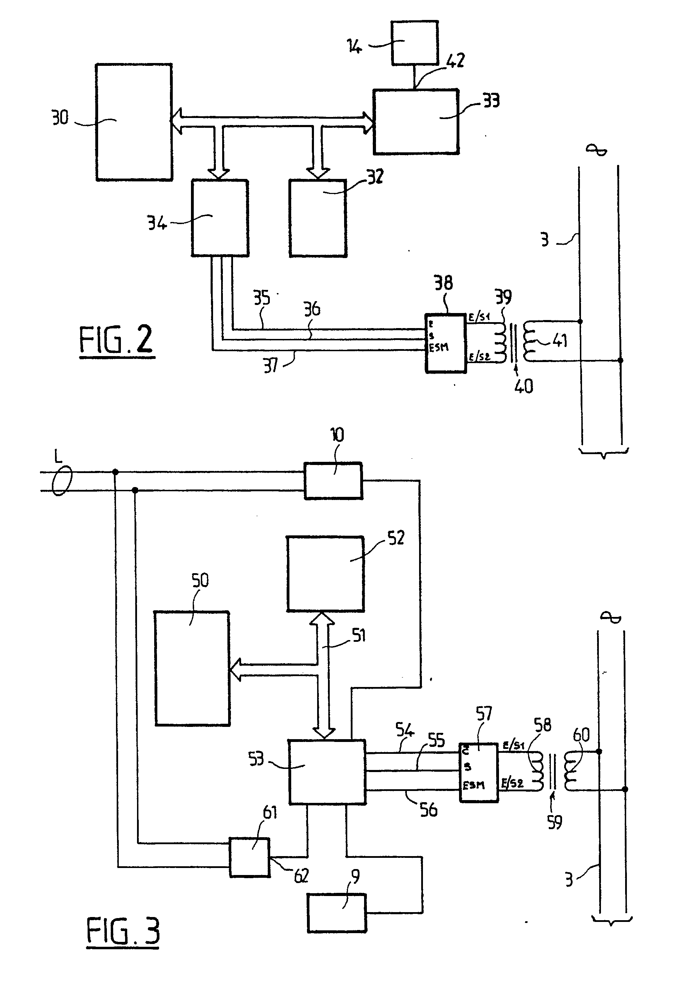

La Fig. 2 représente un schéma synoptique de l'un des dispositifs d'émission, par exemple le dispositif 15 de la Fig. 1. Il comprend essentiellement une unité de traitement de données 30 reliée par un bus de données 31 à une mémoire 32, un convertisseur analogique/numérique 33 et une interface 34, reliée elle-même, par trois fils 35, 36, 37, à une entrée de signal E, une sortie de signal 5 et une entrée de sélection de mode ESM d'un émetteur/récepteur 38. Des entrées/sorties E/S1, E/S2 de celui-ci sont reliées à un enroulement 39 d'un transformateur d'isolation 40 dont l'autre enroulement 41 est relié au réseau de distribution 3.

La mémoire 32 est en fait constituée d'une mémoire de programme et d'une mémoire vive où peuvent être stockées des données. Le convertisseur 33 reçoit sur son entrée 42 les signaux analogiques délivrés par le capteur 14 associé au dispositif d'émission 15 et les convertit en signaux numériques directement exploitables par l'unité 30. L'interface 34 permet à l'unité 30 d'envoyer ou de recevoir des signaux à l'émetteur/récepteur 38, en particulier, avec son entrée E et sa sortie S, et de commander son mode de fonctionnement, émission ou réception, par son entrée ESM.

La Fig. 3 représente un schéma synoptique du dispositif de réception 11 du système de collecte de données de l'invention. Il comprend essentiellement une unité de traitement de données 50 reliée par un bus de données 51 à une mémoire de programme 52 et à une interface 53, elle-même reliée, par trois fils 54, 55, 56, à l'entrée de signal E, la sortie de signal S et l'entrée de sélection de mode ESM d'un émetteur/récepteur 57. Les entrées/sorties E/S1, E/S2 de celui-ci sont reliées à un enroulement 58 d'un transformateur d'isolation 59 dont l'autre enroulement 60 est relié au réseau de distribution 3. L'interface 53 est également reliée au micro-ordinateur 9 et au terminal de télécommunications 10, déjà représentés à la Fig. 1, ainsi qu'à un dispositif de surveillance 61 d'une ligne téléphonique L. Le terminal 10 est également branché sur la ligne téléphonique L.

L'interface 53 permet à l'unité 50 d'échanger des données avec l'émetteur/récepteur 57, en particulier, avec son entrée E et sa sortie S, et de commander son mode de fonctionnement, émission ou réception, par son entrée ESM. Elle permet également d'échanger des données avec le micro-ordinateur 9 et le terminal 10. Elle permet, enfin, de lire le signal issu du dispositif de surveillance 61. Celui-ci reçoit les signaux présents sur la ligne téléphonique L et délivre sur sa sortie 62, lorsqu'au moins un signal de sonnerie apparaît sur la ligne L, un signal d'un niveau prédéterminé signifiant qu'un appel a lieu. Le terminal 9 permet, lorsque la ligne L est prise, d'échanger des données entre la ligne téléphonique L et l'unité de traitement 50.

L'émetteur/récepteur 38 de chaque dispositif d'émission 15, 17, 19, 21 ainsi que celui 57 du dispositif de réception 11 est un émetteur/récepteur par courant porteur fonctionnant en modulation par saut de fréquence (FSK). Il est, par exemple, constitué d'un circuit spécialisé commercialisé par la société National Semiconductor Corporation sous la référence LM 1893. La fréquence de la porteuse est, de préférence, de 125 kHz. En mode émission, ils reçoivent sur leur entrée E un train de bits de données qu'ils transmettent, après modulation de la porteuse, à leurs entrées/sorties E/S1, E/S2. En mode réception, ils reçoivent sur leurs entrées/sorties E/S1, E/S2, un signal modulé, le démodulent et le convertissent en un train de bits qu'ils délivrent à leur sortie S. Chacun de ces deux modes de fonctionnement est sélectionné à la réception d'un signal prédéterminé sur l'entrée de sélection de mode ESM.

L'unité de traitement 30 de chaque dispositif d'émission fonctionne selon le programme enregistré dans la mémoire 32. De même, l'unité de traitement 50 du dispositif de réception 11 fonctionne selon le programme enregistré dans la mémoire 52. Ces programmes déterminent le fonctionnement du système de collecte de l'invention et, en particulier, le protocole de transfert de données entre le dispositif de réception 11 et les dispositifs d'émission 15, 17, 19, 21.

A la mise en route d'un système de collecte sur une nouvelle installation, celui-ci fonctionne selon un mode d'initialisation dans lequel le dispositif de réception 11 affecte d'abord à chaque dispositif d'émission un code d'identification. Puis, les capteurs 14, 16, 18, 20 sont étalonnés. Le capteur de pression 14 du silo de stockage 6 est chargé successivement par plusieurs tares dont les valeurs de masse sont fournies au micro-ordinateur 9 ou au terminal 10 pour être transmises au dispositif de réception 11. Celui-ci les transmet au dispositif d'émission 15, en émettant au préalable son code d'identification. Le dispositif d'émission 15 calcule alors à partir des amplitudes prises par les signaux délivrés par le capteur 14, une table d'étalonnage qu'il stocke dans la mémoire 32. Le même processus est effectué pour le capteur de débit d'aliment liquide 16. A chaque volume de liquide distribué, on associe une valeur entrée au clavier et, une fois un certain nombre de mesures effectuées, le dispositif d'émission 17 calcule une courbe théorique d'étalonnage. On procède de même pour chaque dispositif d'émission et son capteur associé. Lorsque cette opération est terminée, le système de collecte peut fonctionner en mode courant.

Dans le mode courant, le fonctionnement d'un dispositif d'émission, par exemple 15, est le suivant. Son convertisseur 33 reçoit en permanence une tension issue du capteur associé, par exemple 14, qu'il transforme en une valeur numérique. Périodiquement, l'unité de traitement de données 30 commande le convertisseur 33 pour qu'il délivre cette valeur sur le bus de données 31. Elle lit alors cette valeur et calcule à partir de la table d'étalonnage une valeur de mesure qu'elle stocke dans la mémoire 32. Ce processus alterne avec un second processus dans lequel l'unité de traitement 30 analyse, via l'interface 34, le signal délivré par l'émetteur/récepteur 38 sur sa sortie 5 et, si celui-ci correspond à un code d'identification, l'unité de traitement 30 le compare avec son propre code. Si ces deux codes sont identiques, elle vient lire dans la mémoire 32 la valeur de mesure, constitue un message, inverse le niveau du signal sur le fil ESM et envoie ce message, via l'interface 34, sur l'entrée E de l'émetteur/récepteur 38.

Quant au dispositif de réception 11, il analyse en continu, via l'interface 53, le signal issu du terminal 10, celui issu du micro-ordinateur 9 et celui issu du dispositif de surveillance 61. Supposons qu'un appel sur la ligne L ait lieu. Après l'apparition d'au moins un signal de sonnerie, le signal de sortie du dispositif de surveillance 61 prend un niveau prédéterminé. L'unité de traitement 50 lit ce signal et envoie alors, via l'interface 53, un signal de prise de ligne au terminal 10 pour qu'il établisse sa propre connexion sur la ligne L. Celui-ci est donc prêt à recevoir des données de l'appelant et à les transmettre, via l'interface 53, à l'unité de traitement 50. De même, lorsque le dispositif de réception 11 reçoit un signal de commande directement du terminal 10 ou du micro-ordinateur 9, ce signal est transmis, via l'interface 53, à son unité de traitement 50. Celle-ci analyse alors les données reçues et lorsqu'el les correspondent à un code de demande d'accès à un dispositif d'émission, par exemple 15, elle fournit à l'entrée ESM un signal de commande pour mettre l'émetteur/récepteur 57 en mode émission et émet sur son entrée E un train de bits représentatifs du numéro d'adressage du dispositif d'émission demandé. Puis, elle inverse le signal sur le fil ESM, et attend qu'un signal se présente sur la sortie 5. Ce signal correspond à la valeur de mesure issue du dispositif d'émission demandé. Il est reçu, via l'interface 53, par l'unité de traitement 50 qui la transmet alors soit au terminal 9, soit au micro-ordinateur 10, selon celui qui a effectué la demande d'accès.

Ainsi, supposons que le fabricant appelle une installation d'élevage pour effectuer une mise à jour de ces fichiers-clients. Le fabricant effectue la numérotation de la ligne L. Après au moins un signal de sonnerie sur celle-ci, le dispositif de réception 11 établit la connexion du terminal 10 sur la ligne L. Celui-ci est donc prêt à recevoir des données du site central et à les transmettre au dispositif de réception 11. A la réception de données relatives à une demande d'accès aux dispositifs d'émission 15, 17, 19, 21, le dispositif de réception 11 récupère les valeurs de mesure stockées dans les mémoires des dispositifs d'émission et les transmet au terminal 9 où elles sont fournies, via la ligne L au site central. Elles servent alors à la remise à jour des fichiers-clients du fabricant.

De même, si l'éleveur veut, par exemple, connaître son stock d'aliment solide, il peut utiliser le terminal 10 ou le micro-ordinateur 9 qui entre alors en communication avec le dispositif de réception 11. Ce dernier récupère la valeur de mesure stockée dans le dispositif d'émission 15 et la transmet alors soit au terminal 10, soit au micro-ordinateur 9. Dans ce dernier cas, elle peut être traitée informatiquement et servir, par exemple, à la mise à jour d'un fichier servant à le gestion locale de l'installation.

## Revendications

1) Système de collecte, sur un site central, de données d'une pluralité d'installations, en particulier de données concernant l'alimentation des animaux d'une pluralité d'installations d'élevage de bétail, ladite collecte servant, au site central, pour gérer les stocks d'aliments desdites installations, caractérisé en ce que le site central est relié par le réseau téléphonique commuté à chaque installation, celle-ci comprenant un site local (2) sur lequel est installé un terminal (10) et un micro-ordinateur (9) reliés à un dispositif de réception de données (11) et un site distant (1) sur lequel est installé au moins un dispositif d'émission (15, 17, 19, 21) recevant des signaux de mesure d'un capteur (14, 16, 18, 20), les stockant et les fournissant, sous forme de données numérisées, après réception d'un code d'identification déterminé issu du dispositif de réception (11), audit dispositif de réception (11), le milieu de transmission entre chaque dispositif d'émission (15, 17, 19, 21) et le dispositif de réception (11) étant le réseau de distribution électrique (3) de l'installation, le dispositif de réception (11), après réception d'un signal de commande issu soit du site local via le terminal (10) soit du micro-ordinateur (9), transmettant les données qu'il a reçues, sous sa demande, de chaque dispositif d'émission (15, 17, 19, 21) respectivement soit au terminal (10) afin de les transmettre au site central, via le réseau téléphonique, où elles seront traitées pour une gestion informatique globale ou particulière des installations, soit au micro-ordinateur (9) afin de les traiter informatiquement au site local (2).

2) Système de collecte selon la revendication 1, caractérisé en ce que chaque dispositif d'émission (15, 17, 19, 21) comprend une unité de traitement de données (30) reliée, d'une part, à un convertisseur analogique/numérique (33) recevant des signaux analogiques du capteur (14) associé pour les convertir en signaux numériques et, d'autre part, à un émetteur/récepteur (38) couplé, par l'intermédiaire d'un transformateur d'isolation (40), au réseau de distribution électrique (3) de l'installation, l'unité de traitement de données (30) effectuant alternativement, d'une part, une lecture des signaux numériques issus du convertisseur (33), un calcul d'une donnée de mesure à partir de ces signaux et d'une table d'étalonnage mémorisée et une mémorisation de cette donnée de mesure, et, d'autre part, une lecture des signaux reçus de l'émetteur/récepteur (38), la recherche dans ces signaux de signaux correspondant à un code d'identification, une comparaison de ce code avec celui affecté au dispositif d'émission et, lorsqu'il y a identité, la transmission sur le réseau de distribution électrique (3) de l'installation, par l'intermédiaire de l'émetteur/récepteur (38), de la donnée de mesure stockée.

3) Système selon la revendication 2, caractérisé en ce que le dispositif de réception comprend essentiellement une unité de traitement de données (50) qui peut échanger des signaux de données avec le terminal (10), le micro-ordinateur (9) et un émetteur/récepteur (57) couplé, par l'intermédiaire d'un transformateur d'isolation (59), au réseau de distribution électrique (3) de l'installation, l'unité de traitement de données (50) effectuant une lecture des signaux de commande émis par le terminal (10) ou le micro-ordinateur (9) et, lorsque ces signaux correspondent à un code d'une demande d'accès à un dispositif d'émission donné (15, 17, 19, 21), elle transmet sur le réseau de distribution électrique (3) de l'installation, par l'intermédiaire de l'émetteur/récepteur (57), un signal correspondant au code d'identification de ce dispositif d'émission, puis reçoit, en réponse, une donnée de mesure qu'elle envoit au terminal (10) ou au micro-ordinateur (9), selon celui qui a effectué la demande d'accès.

4) Système selon l'une des revendications 1 à 3, caractérisé en ce que le dispositif de réception (11) comporte en outre un détecteur de sonnerie (61) qui envoie à l'unité de traitement de données; (50) un signal de détection lorsqu'au moins un signal de sonnerie apparaît sur la ligne téléphonique L, l'unité de traitement (50), en réponse à ce signal de détection, envoyant au terminal (10) un signal de prise de ligne afin qu'il établisse sa propre connexion sur la ligne téléphonique L, des données pouvant alors être échangées entre la ligne téléphonique L et le dispositif de réception (11) par l'intermédiaire du terminal (10).

FIG.1

FIG.2

FIG.3

**Office européen des brevets**

**RAPPORT DE RECHERCHE EUROPEENNE**

Numéro de la demande

**EP 90 40 2731**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | US-A-4 264 960 (GURR)<br>* Colonne 2, ligne 23 - colonne 6, ligne 12; colonne 7, ligne 3 - colonne 12, ligne 15 * | 1 | G 06 F<br>15/74 |
| A | — — — | 3,4 | |
| Y | FR-A-2 565 714 (BURGARELLA)<br>* Page 3, ligne 1 - page 6, ligne 38; figures * | 1 | |
| A | — — — | 3,4 | |
| A | US-A-4 204 195 (BOGACKI)<br>* Colonne 2, ligne 48 - colonne 5, ligne 20; colonne 5, ligne 53 - colonne 8, ligne 68; figure 1 * | 1-4 | |
| A | — — — | | |
| A | EP-A-0 195 568 (SMITHS INDUSTRIES)<br>* Page 5, lignes 1-7; page 5, ligne 18 - page 7, ligne 9; figures 1,3 * | 1,2 | |
| | — — — — — | | |

|  |
|---|
| **DOMAINES TECHNIQUES RECHERCHES (Int. Cl.5)** |
| G 06 F 15/74<br>H 02 J 13/00 |

Le présent rapport de recherche a été établi pour toutes les revendications

| Lieu de la recherche | Date d'achèvement de la recherche | Examinateur |
|---|---|---|
| La Haye | 30 janvier 91 | BURGAUD C. |